# EUROPÄISCHE PATENTSCHRIFT

(11) **EP 0 579 653 B1**
(45) Veröffentlichungstag und Bekanntmachung des Hinweises auf die Patenterteilung: **07.01.1999**
(21) Anmeldenummer: 92907767.5
(22) Anmeldetag: 04.04.1992
(51) Int. Cl.: H02M 3/335

(54) **ANLAUFSCHALTUNG FÜR EIN SCHALTNETZTEIL**
START-UP CIRCUIT FOR A SWITCHING NETWORK
CIRCUIT DE DEMARRAGE POUR RESEAU DE COMMUTATION

(30) Priorität: 08.04.1991 DE 4111277
(43) Veröffentlichungstag der Anmeldung: 26.01.1994
(73) Patentinhaber: DEUTSCHE THOMSON-BRANDT GMBH, 78048 Villingen-Schwenningen (DE)
(72) Erfinder: LEHR, Steffen, D-7730 Marbach (DE); NEISS, Voker, D-7730 Villingen (DE); KOBLITZ, Rudolf, F-38240 Meylan (FR); RODRIGUEZ-DURAN, José, I., D-7730 Villingen (DE)
(74) Vertreter: Einsel, Robert, Dipl.-Ing.
(86) Internationale Anmeldenummer: EP9200760
(87) Internationale Veröffentlichungsnummer: WO9217934

(56) Entgegenhaltungen:
- EP-A- 336 725
- WO-A-90/02475
- US-A- 4 277 824
- EDN - Electrical Design News, Band 32, Nr. 13, 25 June 1987, Newton, MA, US; M. A. Wayne: "Variable-pulse modulator improves power-supply regulation", Seiten 251-262, siehe Seite 253, Spalte 2 - Seite 254, Spalte 1, Abbildung 3

## Beschreibung

Die Erfindung geht aus von einem Schaltnetzteil gemäß dem Oberbegriff des Anspruchs 1. Bei einem derartigen Schaltnetzteil besteht grundsätzlich die Gefahr, daß beim Einschalten oder beim Ausschalten Bauteile, wie insbesondere der als Leistungsschalter dienende Schalttransistor, durch undefinierte Zustände gefährdet sind. Das ist insbesondere dann der Fall, wenn an einem als Schalter arbeitenden Leistungstransistor gleichzeitig Kollektor-Spannungen und Kollektor-Ströme auftreten oder der Schalttransistor bei voll angelegter Kollektor-Spannung nicht voll durchgeschaltet ist.

Ein Schaltnetzteil nach dem Oberbegriff des Anspruchs 1 ist aus der EP-A-0 336 725 bekannt. Hier wird ebenfalls in Form eines Rückladestromes durch einen Schalter parallel zu einer Gleichrichterdiode und über einen Trenntransformator Energie auf die Primärseite des Schaltnetzteiles übertragen.

Der Erfindung liegt die Aufgabe zugrunde, bei dem eingangs genannten Schaltnetzteil ein kontrolliertes Einschalten und Ausschalten ohne Gefährdung von Bauteilen sicherzustellen, gleichzeitig die Leistungsaufnahme im Anlaufbetrieb zu verringern und insbesondere ein Schaltnetzteil dieser Art so auszubilden, daß ein großer Regelbereich und geringe Verluste in dem Snubber-Netzwerk erzielt werden. Diese Aufgabe wird durch die Merkmale des Anspruchs 1 gelöst. Vorteilhafte Weiterbildungen der Erfindung sind in den Unteransprüchen angegeben.

Das erfindungsgemäße Schaltnetzteil arbeitet nach dem Sperrwandlerprinzip mit einem Schalttransistor, einem Trenntransformator und einem an eine primärseitige Transformatorwicklung angeschlossenen Snubber-Netzwerk zur Reduzierung von Spannungsspitzen. Eine auf der Sekundärseite aus der Betriebsspannung gewonnene Regelinformation wird während der Ruhephase des Transformators in Form eines Rückladestromes durch einen parallel zu einer Gleichrichterdiode geschalteten Schalter und über den Transformator auf die Primärseite übertragen. Die Regelinformation dient auf der Primärseite über eine Regelschaltung zur Regelung der Arbeitsfrequenz und der Einschaltdauer des Schalttransistors. Durch die Regelschaltung ist im Bereich kleiner übertragener Leistung die Arbeitsfrequenz proportional zur übertragenen Leistung geregelt.

Im Bereich großer übertragener Leistung erfolgt unter Aufgabe der Frequenzregelung das Einschalten des Schalttransistors im Anfangsbereich der Ruhephase des Transformators stets unmittelbar am Ende der von der Sekundärseite auf die Primärseite übertragenen Regelinformation. Zu diesem Zeitpunkt ist die Kollektorspannung des Schalttransistors noch klein, so daß die Verlustleistung an dem genannten Snubber-Netzwerk gering gehalten wird. Eine wesentliche Verlustleistung über diesem Netzwerk würde während der Ruhephase des Transformators nach dem Ende der eigentlichen Regelinformation entstehen, wenn der Zeitpunktt des Einschaltens des Schalttransistors nicht wie im Merkmal "im Bereich kleiner übertragener Leistung ist die Arbeitsfrequenz proportional zur übertragenen Leistung geregelt" fest definiert wird. Dann könnte der Fall auftreten, daß der Schalttransistor genau dann einschaltet, wenn die Kollektorspannung in der Ruhephase des Transformators hoch ist. Die Ruhephase wird also nur soweit ausgenutzt, wie es zur Auswertung der Regelinformation zwecks Gewinnung der Regelspannung notwendig ist. Unmittelbar danach wird der Schaltransistor zwangsläufig eingeschaltet. Die Ausschaltzeitdauer des Schalttransistors wird dann im Sinne einer hohen Arbeitsfrequenz auf einen minimal notwendigen Wert beschränkt.

Durch die Kombination der Vorangehend genannten Merkmale werden also insgesamt ein kontrollierter Anlauf beim Einschalten ohne Gefährdung von Bauteilen, ein großer Regelbereich, eine geringe Verlustleistung an dem Snubber-Netzwerk und eine einfache Schaltung erreicht.

Die Erfindung wird im folgenden anhand der Zeichnung an einen Ausführungsbeispiel beschrieben. Darin zeigen
- Fig. 1: ein Schaltbild des Schaltnetzteils gemäß der Erfindung,
- Fig. 2: Kurven zur Erläuterung der Wirkungsweise der Schaltung nach Fig. 1 und
- Fig. 3: den Verlauf der Regelspannungen beim Einschalten des Schaltnetzteils gemäß Fig. 1.

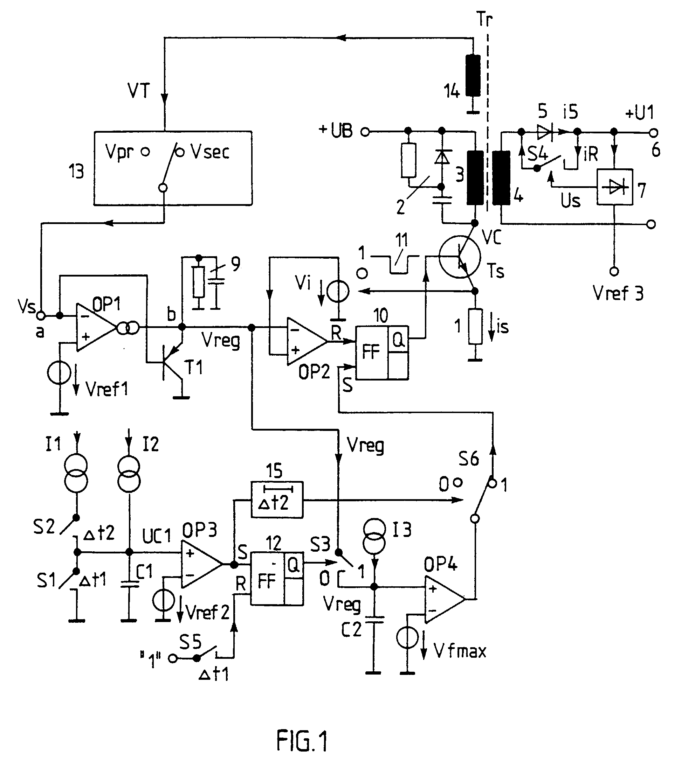

Fig. 1 zeigt im Prinzip ein Schaltnetzteil mit dem als Leistungsschalter arbeitenden Schalttransistor Ts, dem Strommeßwiderstand 1, dem zur Dämpfung von Spannungsspitzen dienenden sogenannten Snubber-Netzwerk 2 aus Widerstand, Diode, Kondensator und dem Transformator Tr mit der Primärwicklung 3 und der Sekundärwicklung 4. Die Sekundärwicklung 4 liefert über den Gleichrichter 5 an der Klemme 6 die positive Betriebsspannung +U1. In der Vergleichsstufe 7 wird die Spannung +U1 mit einer Referenzspannung Vref3 verglichen. Daraus wird eine Stellgröße Us gewonnen. Us betätigt den Schalter S4 derart, daß während der Ruhephase des Transformators Tr, in der Ts und die Diode 5 nichtleitend sind, ein Rückladestrom iR entgegengesetzt zum Ladestrom i5 durch die Diode 5 in den Transformator Tr hineinfließt. Dieser Rückladestrom iR beinhaltet eine Information über die Größe von Ul. Auf der Primärseite wird die entsprechende induzierte Spannung selektiv ausgewertet und zur Regelung der Einschaltdauer und Arbeitsfrequenz von Ts zwecks Stabilisierung von +U1 verwendet. Im folgenden wird die Ansteuerung des Schalttransistors Ts für verschiedene Betriebsphasen erläutert.

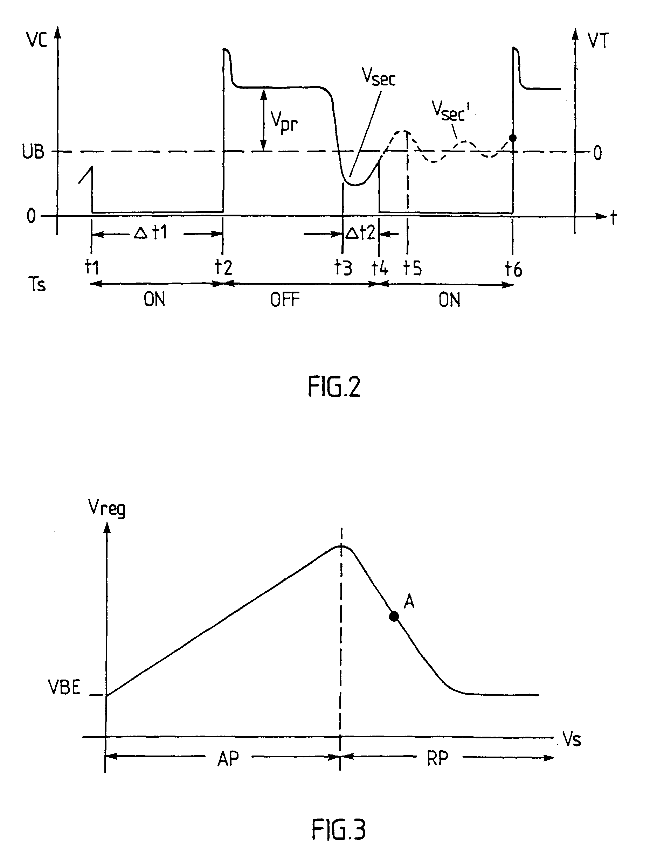

Fig. 2 zeigt die Spannung VC am Kollektor von Ts mit der Gleichspannungskomponente in der Größe von UB. Von der Zusatzwicklung 14 des Transformators Tr wird die Spannung VT abgenommen, die den gleichen Verlauf wie VC hat, jedoch keine Gleichspannungskomponente aufweist. Die Spannung VT gelangt über die Auswertstufe 13 auf die Klemme a. Die Stufe 13 dient dazu, von der Spannung VT zeitlich nacheinander Spannungsanteile Vpr und Vsec in der folgenden beschriebenen Weise auszuwerten.

### Anlaufphase

Die Spannung Vs an der Klemme a ist zunächst nicht vorhanden, weil der Transformator Tr sich noch nicht im Impulsbetrieb befindet und somit auch die Spannung VT noch nicht vorhanden ist. Aufgrund der Referenzspannung Vrefl am "+"-Eingang des Operationsverstärkers OPl fließt daher zunächst ein hoher Strom in das RC-Glied 9, so daß die Regelspannung Vreg an der Klemme b beginnend von der Basis/Emitter-Spannung VBE des Transistors T1 ansteigt. Dies ist durch die Anlaufphase AP in Fig. 3 dargestellt. Der Transistor T1 bewirkt, daß Vreg nicht größer werden kann als Vs zuzüglich der Basis/Emitter-Spannung von T1. Damit wird verhindert, daß im Schalttransistor Ts sofort nach dem Einschalten ein großer Kollektorstrom fließt. Wenn Vs die Spannung Vrefl erreicht, übernimmt der Operationsverstärker OP1 die Funktion, derart, daß nunmehr Vreg in der Regelphase RP gemäß Fig. 3 mit steigendem Vs abnimmt. Die Regelspannung Vreg ist von der Regelinformation Vsec, die durch den Rückladestrom iR auf die Primärseite übertragen wird, abhängig. Die Regelspannung Vreg, die somit die Regelinformation beinhaltet, gelangt auf den "-"-Eingang des Operationsverstärkers OP2, an dessen "+"-Eingang eine Vorspannung Vi angelegt ist. Vi ist abhängig von dem Strom is durch den Widerstand 1.

### Regelung der Einschaltdauer von Ts

Die Stabilisierung von Ul erfolgt durch Regelung der Einschaltdauer und der Variation der Arbeitsfrequenz von Ts. Zu Beginn der Stromflußphase sind is und damit die Spannung am Emitter von Ts gering. Daher ist auch Vi klein. Der ResetEingang R des Flip Flop 10 wird nicht angesteuert. Der Q-Ausgang bleibt daher auf "1", so daß der Transistor Ts eingeschaltet bleibt. Wenn die mit is ansteigende Spannung Vi größer als Vreg wird, erscheint am Ausgang von OP2 Pegel "1", so daß das Flip Flop 10 am Eingang R rückgesetzt wird. Dadurch geht der Q-Ausgang auf "0", und der Transistor Ts wird abgeschaltet. Der Wert von is, bei dem die Abschaltung von Ts erfolgt, ist also abhängig von Vreg, somit von Vsec und daher auch von der Betriebsspannung Ul. Wenn z.B. durch eine erhöhte Last an der Klemme 6 +U1 kleiner werden will, sinkt auch die Regelinformation Vsec, so daß gemäß Fig. 3 Punkt A in der Ruhephase RP Vreg ansteigt. Das bedeutet, daß auch der Maximalwert von is durch die Wirkung von OP2 ansteigt und die über Tr übertragene Energie zwecks Stabilisierung von +U1 größer wird.

### Regelung der Ausschaltdauer von Ts zur Frequenzregelung

Bei t1 in Fig. 2 wird der Schalter S1 während der Zeitdauer Δt1 geschlossen. Dadurch wird die Spannung UC1 am Kondensator C1 gleich null, der Ausgang des Operationsverstärkers OP3 geht auf "0". Der Rücksetzeingang R des Flip Flop 12 ist während der Zeit Δt1 auf Pegel "1" gelegt. Der Q-Ausgang des Flip Flop 12 wird daher "0", so daß der Schalter S3 geschlossen wird. Dadurch wird die Regelspannung Vreg an den Kondensator C2 und den "+"-Eingang des Operationsverstärkers OP4 angelegt. Dabei ist zunächst Vreg kleiner als Vfmax am "-"-Eingang von OP4, so daß am Ausgang von OP4 zunächst kein Signal erscheint. Bei t3 wird für den Zeitraum Δt2 der Schalter S2 geschlossen. Dadurch wird C1 durch einen entsprechend großen Strom I1 schnell aufgeladen. UC1 am "+"-Eingang von OP3 erreicht sehr schnell den Wert von Vref2 am "-"-Eingang, so daß der Ausgang von OP3 auf "1" geht. Dadurch wird das Flip Flop 12 am Eingang S gesetzt und der Schalter S3 geöffnet. Der noch die Regelspannung Vreg führende Kondensator C2 wird dadurch an Vreg ander Klemme b getrennt. Der Kondensator C2 wird jetzt durch einen kleinen Strom I3 in der Größenordnung von 1 µA weiter aufgeladen. Wenn jetzt die Spannung an C2 den Wert Vfmax erreicht, geht der Ausgang von OP4 auf "1". Dadurch wird das Flip Flop 10 am Eingang S gesetzt. Dessen Q-Ausgang geht auf "1", und Ts wird wieder eingeschaltet. Der Einschaltzeitpunkt t4 ist somit von Vreg abhängig, da der Kondensator C2 jeweils von dem Wert Vreg an durch I3 aufgeladen wird.

Wenn z.B. die Spannung Ul durch eine hohe Last an der Klemme 6 sinken will, wird der Anteil Vsec in VC bzw. VT kleiner und demzufolge Vreg in der Ruhephase RP an der Klemme b gemäß Fig. 3 größer. Vreg am Kondensator C2 im Zeitpunkt t3 beim öffnen von S3 wird also größer. Bei der folgenden Aufladung von C2 durch I3 wird also das Ansprechen von OP4 früher erreicht. Das bedeutet, daß Ts früher eingeschaltet wird, die Ausschaltdauer verringert und somit in erwünschter Weise aufgrund der erhöhten Last an der Klemme 6 die Arbeitsfrequenz erhöht wird. Die Stabilisierung von +U1 durch Regelung der Einschaltdauer von Ts in der bereits beschriebenen Weise bleibt dabei unverändert.

### Regelung der Ausschaltdauer von Ts bei hoher Leistung

Im Bereich hoher Leistung würde in dem Widerstand des Snubber-Netzwerkes 2 eine relativ hohe Verlustleistung entstehen, wenn der Schalttransistor Ts z.B. zum Zeitpunkt t5 (Vsec') eingeschaltet werden würde. Deshalb wird bei hoher Leistung unter Aufgabe der beschriebenen Frequenzregelung der Schalttransistor Ts grundsätzlich bei t4 am Ende des für die Regelung benötigten Spannungsteiles Vsec wieder eingeschaltet. Dies wird in der Schaltung nach Fig. 1 folgendermaßen erreicht: Vfmax ist so eingestellt, daß bei hoher Leistung Vreg beim Schließen des Schalters S3 bereits größer ist als Vfmax. Der Strom I3 hat dann nicht mehr die beschriebene Wirkung zur Regelung der Abschaltdauer von Ts. Vielmehr wird in erwünschter Weise Ts ohne Regelung der Abschaltdauer immer bei t4 am Ende von Vsec eingeschaltet.

Der Schalter S6 hat dabei noch folgende Bedeutung. Die Regelspannung Vreg erscheint durch das Schließen von S3 während Δt1 bereits am Kondensator C2. Dadurch würde der Ausgang von OP4 an sich das Flip Flop 10 schon nach t2 setzen und Ts einschalten. Das ist aber nicht erwünscht, weil Vsec von t3 - t4 noch ausgewertet werden muß. Deshalb wird der Schalter S6 erst dann geschlossen, wenn das zum Zeitpunkt t3 auftretende "1"-Signal des Operationsverstärkers OP3 um Δt2 verzögert zum Zeitpunkt t4 erscheint. Für die Betätigung des Schalters S6 im richtigen Zeitpunkt ist noch die Verzögerungsstufe 15 vorgesehen, die das Schaltsignal vom Setzeingang S des Flip Flop 12 und die Zeit Δt2 verzögert. Das Setzen des Elip Flop 10 und damit das Einschalten von Ts erfolgen also dann, wenn einerseits Vreg über S3 an den "+"-Eingang von OP4 angelegt und zusätzlich der Schalter S6 durch OP3 geschlossen ist.

## Patentansprüche

1. Schaltnetzteil nach dem Sperrwandlerprinzip mit einem Schalttransistor (Ts), einem Trenntransformator (Tr) und einem an eine primärseitige Transformatorwicklung angeschlossenen Snubber-Netzwerk (2) zur Reduzierung von Spannungsspitzen, wobei eine auf der Sekundärseite aus der Betriebsspannung (U1) gewonnene Regelinformation (Vsec) während der Ruhephase des Trenntransformators (Tr) in Form eines Rückladestromes (iR) durch einen parallel zu einer Gleichrichterdiode (5) geschalteten Schalter (S4) und über den Trenntransformator (Tr) auf die Primärseite übertragen wird, **dadurch gekennzeichnet,**
daß die Regelinformation auf der Primärseite über eine Regelschaltung zur Regelung der Arbeitsfrequenz und der Einschaltdauer des Schalttransistors (Ts) dient,
daß durch die Regelschaltung im Bereich kleiner übertragener Leistung die Arbeitsfrequenz proportional zur übertragenen Leistung geregelt ist, und
daß im Bereich großer übertragener Leistung das Einschalten des Schalttransistors (Ts) im Anfangsbereich der Ruhephase des Trenntransformators (Tr) stets unmittelbar am Ende der von der Sekundärseite auf die Primärseite übertragenen Regelinformation (Vsec) erfolgt.

2. Schaltnetzteil nach Anspruch 1 **dadurch gekennzeichnet,** daß der Impuls (11) zum Abschalten des Schalttransistors (Ts) in einer ersten Vergleichsstufe (OP2) erzeugt ist, an deren Eingänge eine vom Strom (is) durch den Schalttransistor (Ts) abhängige Spannung (Vi) und eine aus der Regelinformation (Vsec) abgeleitet Regelspannung (Vreg) angelegt sind.

3. Schaltnetzteil nach Anspruch 2, **dadurch gekennzeichnet,** daß der Impuls (11) zum Einschalten des Schalttransistors (Ts) in einer zweiten Vergleichsstufe (OP4) erzeugt ist, an deren Eingänge eine konstante Referenzspannung (Vfmax) und die Regelspannung (Vreg) angelegt sind.

4. Schaltnetzteil nach Anspruch 3, **dadurch gekennzeichnet,** daß die Vergleichsschaltung (OP4) so bemessen ist, daß der Impuls (11) zum Einschalten des Schalttransistors (Ts) unmittelbar am Ende der Regelinformation (Vsec) ausgelöst wird.

5. Schaltung nach Anspruch 3, **dadurch gekennzeichnet,** daß an einen Eingang der zweiten Vergleichsstufe (OP4) ein Kondensator (C2) angeschlossen ist, an den einerseits eine Konstantstromquelle (13) und andererseits die Regelspannung (Vreg) über einen Schalter (S3) angelegt ist, der während der Ruhephase und damit auch während der Regelinformation (Vsec) geöffnet wird.

6. Schaltung nach Anspruch 1, **dadurch gekennzeichnet,** daß eine Zusatzwicklung (14) des Transformators (Tr) an den Eingang einer Auswertstufe (13) angeschlossen ist, die zeitlich nacheinander verschiedene Spannungsanteile (Vpr, Vsec) der Spannung (VT, VC) am Transformator (Tr) auswertet und der Regelschaltung zuführt.

## Claims

1. Switch mode power supply according to the flyback principle including a switching transistor (Ts), an isolating transformer (Tr) and a snubber network (2) connected to a transformer winding on the primary side for reducing voltage peaks wherein a regulation information (Vsec) derived from the operating voltage (U1) on the secondary side is transmitted to the primary side during the idle phase of the isolating transformer (Tr) in form of a reverse charging current (iR) via a switch (S4) connected in parallel with a rectifier diode (5) and via the isolating transformer (Tr) characterized in that
the regulation information serves for regulating the operating frequency and the switch-on duration of the switching transistor (Ts) on the primary side,
that within a range of low transmitted power the operating frequency is regulated by said regulating circuit proportionally to the transmitted power, and
that within a range of high transmitted power the switching-on of the switching transistor (Ts) occurs in the start region of the idle phase of the isolating transformer (Tr) always directly at the end of the regulating information (Vsec) transmitted from the secondary side to the primary side.

2. Switch mode power supply according to claim 1,
characterized in that the impulse (11) for switching off the switching transistor (Ts) is generated in a first comparator stage (OP2), to the inputs of which a voltage (Vi) dependent upon the current (is) through the switching transistor (Ts) and a regulating voltage (Vreg) derived from the regulating information (Vsec) are applied.

3. Switch mode power supply according to claim 2,
characterized in that the impulse (11) for switching on the switching transistor (Ts) is generated in a second comparator stage (OP4), to the inputs of which a constant reference voltage (Vfmax) and the regulating voltage (Vreg) are applied.

4. Switch mode power supply according to claim 3,
characterized in that the comparator circuit (OP4) is so dimensioned that the impulse (11) for switching on the switching transistor(Ts) is triggered immediately at the end of the regulating information (Vsec).

5. Circuit according to claim 3,
characterized in that a capacitor (C2) is connected to one input of the second comparator stage (OP4), wherein, on the one hand, a constant current source (13) and, on the other, the regulating voltage (Vreg) are applied to said capacitor via a switch (S3) which is opened during the idle phase and hence also during the regulating information (Vsec).

6. Circuit according to claim 3,
characterized in that an additional winding (14) of the transformer (Tr) is connected to the input of an evaluation stage (13) which evaluates, in a temporally successive manner, different voltage components (Vpr, Vsec) of the voltage (VT, VC) at the transformer (Tr) and feeds them to the regulating voltage.

## Revendications

1. Réseau de commutation selon le principe du convertisseur de blocage avec un transistor de commutation (Ts), un transformateur d'isolement (Tr) et un circuit d'amortissement (2) relié à un enroulement de transformateur de côté primaire pour la réduction des pointes de tension, où une information de réglage (Vsec) obtenue à partir de la tension de fonctionnement (U1) sur le côté secondaire est transmise sur le côté primaire pendant la phase de repos du transformateur d'isolement (Tr) sous la forme d'un courant de charge inverse (iR) à travers un interrupteur (S4) monté parallèlement à une diode de redressement (5) et via le transformateur d'isolement (Tr) **caractérisé en ce que**
l'information de réglage sert sur le côté primaire via un circuit de réglage, au réglage de la fréquence de travail et de la durée de mise en circuit du transistor de commutation (Ts),
par le circuit de réglage, en ce qui concerne une faible puissance transmise, la fréquence de travail est réglée proportionnellement à la puissance transmise, et
en ce qui concerne une grande puissance transmise, la mise en circuit du transistor de commutation (Ts) dans la zone de commencement de la phase de repos du transformateur d'isolement (Tr), se produit toujours directement à la fin de l'information de réglage (Vsec) transmise par le côté secondaire sur le côté primaire.

2. Réseau de commutation conformément à la revendication 1, **caractérisé en ce que** l'impulsion (11) pour la mise hors circuit du transistor de commutation (Ts) est produite dans un premier étage comparateur (OP2), aux entrées duquel une tension (Vi) dépendant du courant (is) dans le transistor de commutation (Ts) et une tension de réglage (Vreg) dérivée de l'information de réglage (Vsec) sont appliquées.

3. Réseau de commutation conformément à la revendication 2, **caractérisé en ce que** l'impulsion (11) pour la mise en circuit du transistor de commutation (Ts) est produite dans un deuxième étage comparateur (OP4), aux entrées duquel une tension de référence constante (Vfmax) et la tension de réglage (Vreg) sont appliquées.

4. Réseau de commutation conformément à la revendication 3, **caractérisé en ce que** le circuit comparateur (OP4) est dimensionné de sorte que l'impulsion (11) pour la mise en circuit du transistor de commutation (Ts) est déclenchée directement à la fin de l'information de réglage (Vsec).

5. Circuit conformément à la revendication 3, **caractérisé en ce que** à une entrée du deuxième étage comparateur (OP4) est relié un condensateur (C2), auquel d'un côté une source de courant constant (13) et de l'autre côté la tension de réglage (Vreg) via un interrupteur (S3) sont appliquées, interrupteur qui est ouvert pendant la phase de repos et ainsi également pendant l'information de réglage (Vsec).

6. Circuit conformément à la revendication 1, **caractérisé en ce que** un enroulement supplémentaire (14) du transformateur (Tr) est relié à l'entrée d'un étage d'évaluation (13), qui exploite, les unes après les autres temporellement, différentes composantes de tension (Vpr, Vsec) de la tension (VT, VC) au niveau du transformateur (Tr) et les fournit au circuit de régulation.
